# EUROPEAN PATENT SPECIFICATION

(11) **EP 1 962 653 B1**
(45) Date of publication and mention of the grant of the patent: **05.08.2015**
(21) Application number: 06841294.9
(22) Date of filing: 07.12.2006
(51) Int. Cl.: A47J 31/18, A47J 31/56

(54) **A COFFEE MACHINE AND A CONTROL METHOD**
KAFFEEMASCHINE UND STEUERVERFAHREN
CAFETIÈRE ET PROCÉDÉ DE COMMANDE

(30) Priority: 19.12.2005 TR 200505085
(43) Date of publication of application: 03.09.2008
(73) Proprietor: Arçelik Anonim Sirketi, 34950 Istanbul (TR)
(72) Inventor: HASANREISOGLU, Levent, 34950 Istanbul (TR)
(86) International application number: PCT/EP2006/069413
(87) International publication number: WO 2007/071567

(56) References cited:
- WO-A-2004/069013
- CZ-A3- 20 010 762
- GR-A- 2001 100 013

## Description

The present invention relates to a coffee machine and a control method.

In the automatic coffee machines that prepare Turkish coffee in accordance with the customary taste, the desired amount of ground coffee, sugar and cold water are put in the container named as the cooking chamber or the boiling pot, the prepared mixture is first stirred well, then the boiling process is carried out by a heater. Since Turkish coffee has the characteristic of overflowing by quickly foaming during boiling, the foam has to be prevented from overflowing, and in order to prepare Turkish coffee in accordance with the traditional taste and consistency, the rising of the foam has to be controlled and the heating process has to be ended just before reaching the boiling point. When making traditional Turkish coffee in a coffee pot, the person boiling the coffee takes away the pot from the heat at the moment of rising. Thus the rising duration is extended, allowing the coffee particles to mix better with water and overflowing of the coffee is prevented. In automatic coffee machines preparing Turkish coffee, since the rising by foam and in order to attain the desired taste the foam height is desired to reach a certain level, a big volume cooking chamber or boiling pot has to be used for a small amount of coffee, taking into consideration the volume taken up by the boiled coffee together with the foam, and it is difficult to make a lot of coffee at one time.

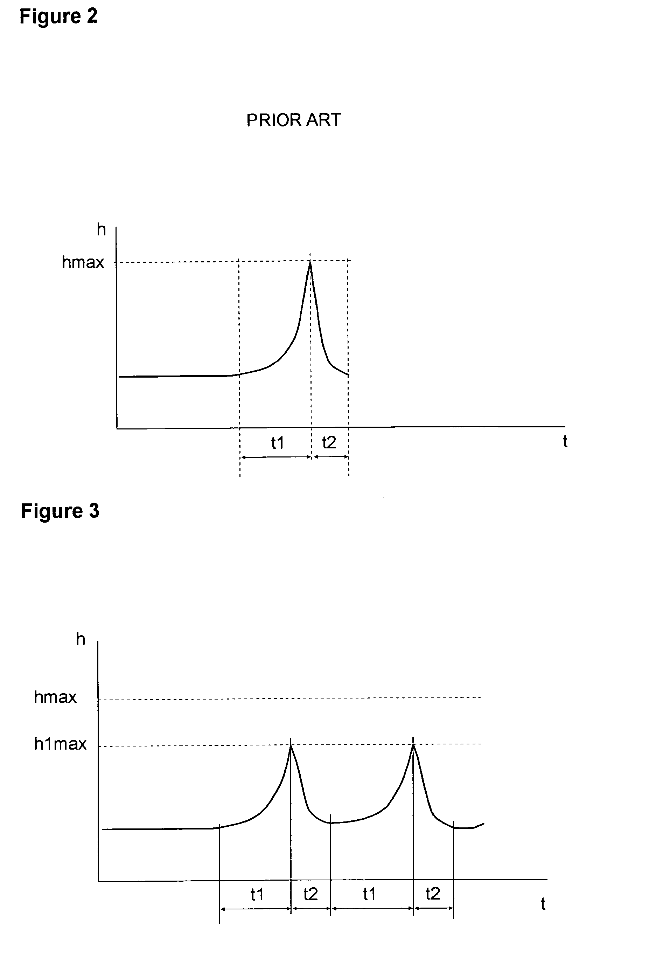

In the Turkish Patent Application no. TR200300199, the heating system of an automatic coffee machine that prepares Turkish coffee in accordance with the customary taste and consistency is explained. The boiling of the Turkish coffee is provided by a heater that contacts the bottom surface of the boiling pot moving upwards and downwards by means of a lifting mechanism. The boiling process is ended by the triggering of sensors that detect that Turkish coffee has boiled with the desired density. In the coffee machine that is explained, when coffee starts to boil, the heater operates for some time until foaming starts, it operates for a while longer after the foam starts rising, the operation of the heater is ended at the moment of reaching the maximum foam height (hmax), completing the boiling process and coffee is poured into the cups (Figure 2).

The aim of the present invention is the realization of a coffee machine for preparing Turkish coffee with the desired consistency, wherein overflowing of the boiled coffee is prevented, and a control method.

The coffee machine and the control method realized in order to attain the aim of the present invention is explicated in the claims.

The coffee machine of the present invention is suitable for preparing Turkish coffee and after putting in the ingredients like coffee, sugar and water in a boiling pot, the coffee boiling process is started by heating with a heater from the bottom. The start of foaming and the rising of the foam level in the coffee during boiling is controlled by a level sensor that is preferably situated on the ceiling of the boiling pot. The mixture in the boiling pot is cold at the beginning, coffee is heated for a determined time period during boiling and formation of the foam starts. Starting from the formation of the foam, the heater continues operating until the foam reaches a predetermined maximum level detected by the sensor or allowed to rise for a determined time duration such that the maximum level is not exceeded. Afterwards the operation of the heater is ended, to wait for the foam to subside and then the heater is operated again. In this way, the heating - turning off processes are repeated for a predetermined number of times by rising and lowering of the foam.

The advantages of this repeated boiling process, as well as machines suitable for carrying it out, are described in CZ20010762 and IT1243191.

In the coffee machine and the control method of the present invention, the rising of a lower foam more than once is preferred instead of the foam rising too high and only one time, accordingly it is possible to boil a larger amount of coffee in the boiling pot at one time without overflowing.

The coffee machine realized in order to attain the aim of the present invention is illustrated in the attached figures, where:

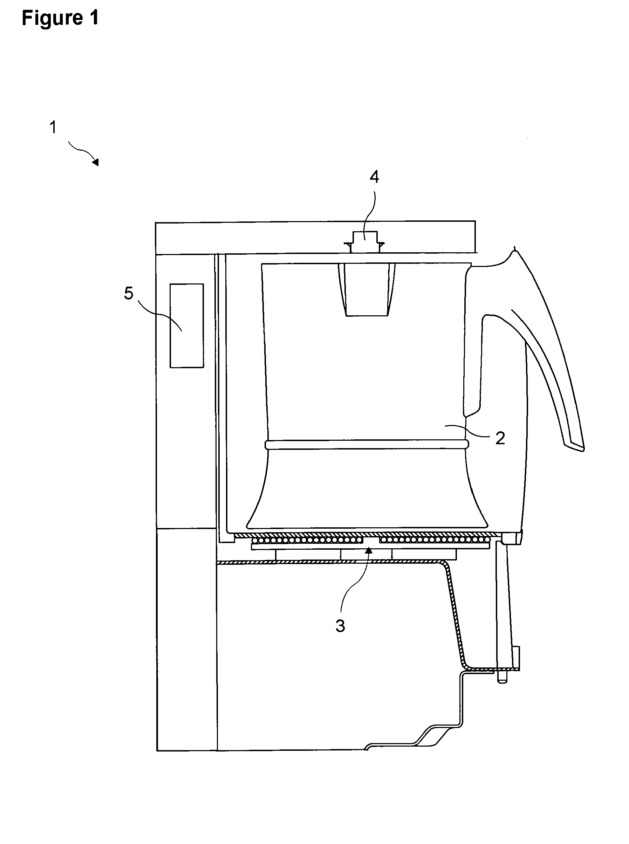

Figure 1 - is the schematic view of a coffee machine.
Figure 2 - is the foam height - time graph in the control method of the conventional coffee machine. Figure 3 - is the foam height - time graph in the control method of the present invention.

Elements shown in figures are numbered as follows:
1. Coffee machine
2. Boiling pot
3. Heater
4. Level sensor
5. Control unit

The coffee machine (1) comprises a boiling pot (2) into which ingredients like water, coffee and sugar are put to form a liquid mixture, a heater (3) that provides heating the boiling pot (2) for a determined boiling duration, a level sensor (4) that detects the level of the foam formed during boiling, and a control unit (5) that controls the boiling process according to the predetermined time durations and the information received from the level sensor (4).

The below given symbols are used to explicate the control method carried out in the coffee machine (1) of the present invention:
n : Number of repeated heatings
t1 : Foam rising duration
t2 : Foam subsiding duration
hmax : Maximum foam height in conventiol state of the art
h1max : Maximum foam height determined such that overflowing will not occur by adjusting the power of the heater (3)

In the coffee machine (1), the control unit (5) provides to repeat for a predetermined number of times (n) the processes of transferring heat from the heater (3) to the boiling pot (2) until the liquid in the boiling pot (2) starts forming some amount of foam and then cutting off the transfer of heat from the heater (3) to the boiling pot (2) until the foam subsides, consequently enabling the coffee particles to mix more homogeneously with the water by prolonging the total foaming time,.

In a variant not according to the present invention, the processes of the heater (3) transferring heat and cutting off the heat is controlled by the level sensor (4) that detects the height of the foam in the boiling pot (2). At the moment when the foam height reaches a predetermined level (h1max), the transfer of heat from the heater (3) to the boiling pot (2) is cut off by the triggering of the level sensor (4), and when the foam subsides, heat is again transferred from the heater (3) to the boiling pot (2) by the triggering of the level sensor (4).

In the present invention, the process of heat transfer and cutting off the heat by the heater (3) is controlled by the predetermined foam rising duration (t1) and foam subsiding duration (t2). Heat is transferred by the heater (3) to the boiling pot (2) for a foam rising duration (t1) predetermined to provide the desired foaming, after this duration is completed and after waiting for a predetermined foam subsiding duration (t2), heat is again transferred from the heater (3) to the boiling pot (2).

In the control method of the coffee machine (1), the foam is provided to reach the maximum foam level (hmax) more than once (n) by means of the control unit (5) regulating the power of the heater (3) such that coffee does not overflow from the boiling pot (2). Instead of the conventional state of the art, wherein the foam reaches the maximum level (hmax) only once and then cutting off the heat transfer from the heater (3) and not turning on again, the rising of the foam for more than one time (n) and rising less ( h1max < hmax ) is preferred, preventing overflowing, thus making possible to boil a larger amount of coffee in the boiling pot (2) in one time and the desired consistency of the coffee is provided.

The control method wherein repeated heating is carried out in the coffee machine (1) is comprised of the following steps:
- Coffee machine (1) is actuated.
- Heat is transferred from the heater (3) to the boiling pot (2) and the mixture starts foaming.
- The foam is allowed to rise for a determined rising duration (t1).
- Heat transfer from the heater (3) to the boiling pot (2) is cut off at the end of the foaming rising duration (t1).
- Waiting for the foam to subside for a determined subsiding duration (t2)
- The processes of heat transfer from the heater (3) to the boiling pot (2) and cutting off the heat transfer are repeated a predetermined number of times (n).
- The boiling process is ended.

In a further variant not according to the present invention, the coffee machine (1) comprises a movable heater (3) which is powered in the foam rising durations (t1) that rises to contact the base of the boiling pot (2) and in the foam subsiding durations (t2) moves away from the base of the boiling pot (2) by descending. The thermal inertia of the heater (3) does not effect the boiling pot (2) since it moves away from the base of the boiling pot (2) in the foam subsiding durations (t2).

In the present invention, the coffee machine (1) comprises an induction type heater (3) that provides to transfer heat to the boiling pot (2) in the foam rising durations (t1) and cuts off the heat transfer to the boiling pot (2) in the foam subsiding durations (t2). Since the thermal inertia of induction type heaters (3) is low as to be considered negligible, at the moment when the current delivered to the induction type heater (3) is cut off at the end of the rising durations (t1), the heating of the boiling pot (2) and rising ends and current is not delivered to the induction type heater (3) in the foam subsiding duration (t2).

In the coffee machine (1) of the present invention and the control method, well mixed Turkish coffee, in accordance with its traditional flavor and consistency, is prepared and overflowing is prevented by prolonging the duration of the foaming wherein the melting of the coffee particles is enabled. Furthermore overflowing is prevented by preferring the foam to rise a multiple number of times instead of too much rising at one time and a larger amount of coffee can be made in the boiling pot (2) all at once.

## Claims

1. A coffee machine (1) comprising a boiling pot (2) into which ingredients like water, coffee and sugar is put to form a liquid mixture, a heater (3) that provides heating the boiling pot (2) for a determined boiling duration, a level sensor (4) that detects the level of the foam formed during boiling, and a control unit (5) that provides to repeat a predetermined number of times (n), carrying out the processes of transferring heat from the heater (3) to the boiling pot (2) until the liquid in the boiling pot (2) starts forming some amount of foam and then cutting off the transfer of heat from the heater (3) to the boiling pot (2) until the foam subsides, **characterized in that** the heater (3) is an induction type heater, wherein the induction type heater (3) provides to transfer heat to the boiling pot (2) in the predetermined foam rising durations (t1), after this duration (t1) is completed, cuts off the heat transfer to the boiling pot (2) in the predetermined foam subsiding duration (t2) and after waiting for this duration (t2), again transfers heat to the boiling pot (2).

2. A control method for a coffee machine (1) as in Claim 1, comprising the following steps:
- Actuation of the coffee machine (1),
- Transfer of heat from the heater (3) to the boiling pot (2) and the mixture starting to foam,
- Allowing the foam to rise for a determined duration (t1),
- Cutting off the heat transfer from the heater (3) to the boiling pot (2) at the end of the foaming duration (t1),
- Waiting for the foam to subside for a determined subsiding duration (t2),
- Repeating the processes of heat transfer from the heater (3) to the boiling pot (2) and cutting off the heat transfer a predetermined number of times (n),
- Ending the boiling process.

## Patentansprüche

1. Kaffemaschine (1), umfassend einen Brühbehälter (2), in den Zutaten wie Wasser, Kaffee und Zucker gegeben werden, um ein flüssiges Gemisch zu bilden, eine Heizeinrichtung (3), die den Brühbehälter (2) für eine vorgegebene Brühdauer erwärmt, einen Pegelsensor (4), der den Pegel des Schaums erkennt, der sich während des Brühens bildet, und eine Steuereinheit (5), die dafür sorgt, dass eine vorgegebene Anzahl (n) von Wiederholungen durchgeführt wird, indem die Prozesse des Übertragens von Wärme von der Heizeinrichtung (3) an den Brühbehälter (2), bis die Flüssigkeit im Brühbehälter (2) beginnt, eine gewisse Menge Schaum zu erzeugen, und dem Unterbrechen der Wärmeübertragung von der Heizeinrichtung (3) an den Brühbehälter (2), bis sich der Schaum abbaut, ausgeführt werden, **dadurch gekennzeichnet, dass** die Heizeinrichtung (3) eine Heizeinrichtung des Induktionstyps ist, wobei die Heizeinrichtung des Induktionstyps (3) dafür sorgt, dass Wärme während der vorgegebenen Schaumaufbauperioden (t1) an den Brühbehälter (2) übertragen wird, nach Abschluss dieser Periode (t1) die Wärmeübertragung an den Brühbehälter (2) während der vorgegebenen Abbauperiode (t2) unterbrochen wird und nach dem Warten während dieser Periode (t2) erneut Wärme an den Brühbehälter (2) übertragen wird.

2. Steuerverfahren für eine Kaffeemaschine (1) nach Anspruch 1, folgende Schritte umfassend:
- Betätigen der Kaffeemaschine (1),
- Übertragen von Wärme von der Heizeinrichtung (3) an den Brühbehälter (2) und Beginnen der Schaumbildung des Gemischs,
- Ansteigenlassen des Schaums für eine vorgegebene Periode (t1),
- Unterbrechen der Wärmeübertragung von der Heizeinrichtung (3) an den Brühbehälter (2) am Ende der Aufschäumperiode (t1),
- Warten auf ein Legen des Schaums für eine vorgegebene Abbauperiode (t2),
- Wiederholen der Prozesse der Wärmeübertragung von der Heizeinrichtung (3) an den Brühbehälter (2) und Unterbrechen der Wärmeübertragung mit einer vorgegebenen Anzahl (n),
- Beenden des Brühprozesses.

## Revendications

1. Une machine à café (1) comprenant un pot d'ébullition (2) dans lequel les ingrédients tel que l'eau, le café et le sucre sont placés à faire un mélange liquide, un dispositif de chauffage (3) pour le chauffage du pot d'ébullition (2) pendant une période déterminée d'ébullition, un capteur de niveau (4) qui détecte la montée de la mousse pendant l'ébullition, et une unité de commande (5) qui permet à répéter un nombre prédéterminé de fois (n), qui exécute les processus de transfert de chaleur à partir du dispositif de chauffage (3) au pot d'ébullition (2) jusqu'à ce que le liquide dans le pot d'ébullition (2) commence à former un certain quantité de mousse et ensuite de coupage du transfert de chaleur à partir du dispositif de chauffage (3) au pot d'ébullition (2) jusqu'à ce que la mousse se baisse, **caractérisée en ce que** le dispositif de chauffage (3) est un dispositif de chauffage du type à induction, où le dispositif de chauffage du type à induction (3) permet le transfert de chaleur au pot d'ébullition (2) pendant les durées prédéterminées de montée de mousse (t1), après que cette durée (t1) se termine, coupe le transfert de chaleur au pot d'ébullition (2) dans la durée prédéterminée de baisse de mousse (t2) et après que cette durée (t2) se termine, transfère à nouveau la chaleur au pot d'ébullition (2).

2. Un procédé de commande pour une machine à café (1) selon la Revendication 1, comprenant les étapes suivantes :
Faire démarrer la machine à café (1),
- Transférer la chaleur à partir du dispositif de chauffage (3) au pot d'ébullition (2) et le mélange commençant à mousser,
- Permettre à la mousse de monter pour une durée prédéterminée (t1),
- Couper le transfert de chaleur à partir du dispositif de chauffage (3) au pot d'ébullition (2) à la fin de la durée de mousser (t1),
- Attendre que la mousse se baisse pour une durée déterminée de baisse (t2),
- Répéter les processus du transfert de chaleur à partir du dispositif de chauffage (3) au pot d'ébullition (2) et de coupage du transfert de chaleur pour un nombre prédéterminé de fois (n),
- Mettre fin au processus d'ébullition.
